# EUROPEAN PATENT SPECIFICATION

(11) **EP 0 469 496 B1**
(45) Date of publication and mention of the grant of the patent: **28.09.1994**
(21) Application number: 91112674.6
(22) Date of filing: 27.07.1991
(51) Int. Cl.: H02K 49/04

(54) **Eddy current type retardation device**
Wirbelstrombremse
Dispositif ralentisseur du type à courants de Foucault

(30) Priority: 30.07.1990 JP 201820/90
(43) Date of publication of application: 05.02.1992
(73) Proprietor: Isuzu Motors Limited, Shinagawa-ku, Tokyo 140 (JP)
(72) Inventor: Kuwahara, Tohru, c/o Isuzu Motors Ltd., Kawasaki-shi, Kanagawa-ken (JP)
(74) Representative: Niedmers, Ole, Dipl.-Phys.

(56) References cited:
- EP-A- 0 367 387
- PATENT ABSTRACTS OF JAPAN vol. 14, no. 95 (E-0892) 21 February 1990 & JP-A-01 298948

## Description

The present invention principally relates to an eddy current type retardation device. Such eddy current type retardation device is used for assisting a friction brake of a large-type vehicle which effectively avoids dragging of a brake drum caused by a leakage of magnetic flux at the time of non-braking.

In an eddy current type retardation device disclosed in Japanese Patent Laid-Open No. 298948/1989 publication, a magnetic control cylinder in which pole pieces having substantially the same area as that of permanent magnets are arranged at peripherally equal intervals on a non-magnetic plate formed of aluminium or the like is rotatably arranged within a brake drum connected to a rotational shaft, and a magnet supporting ring having a number of permanent magnets connected thereto at peripherally equal intervals so that polarities thereof with respect to the brake drum are alternately different is disposed within the magnetic control cylinder.

When the pole pieces hold the magnetic control cylinder at a position opposed to the permanent magnets at the time of braking, the magnetic field from the permanent magnets permeate through the pole pieces to vertically act on the brake drum, and when the brake drum crosses the magnetic field, an eddy current flows into the brake drum, as a consequence of which the brake drum receives a braking torque. When the pole pieces hold the magnetic control cylinder at a rotated position deviated by an arranging pitch amount of the permanent magnets at the time of non-braking, each pole piece is laid over two magnets peripherally adjacent to each other to form a short-circuited magnetic closed circuit passing through two permanent magnets adjacent to each other, the pole piece and the magnet supporting ring, as a consequence of which the magnetic field applied to the brake drum becomes extremely weakened, and the braking torque received by the brake drum becomes extremely small.

However, the magnetic flux leaked from a peripheral centre portion of the permanent magnet not covered by the pole pieces acts on the brake drum. Therefore, there arises a problem in that the brake drum receives a dragging torque. If the thickness of the magnetic control cylinder is increased in order to minimize the leaking magnet flux from the permanent magnets to the brake drum, the entire device increases its weight, and a spacing between the permanent magnets and the brake drum becomes widened, as a consequence of which the magnetic field which permeates the pole pieces from the permanent magnets and reaches the brake drum at the time of braking decreases and the brake torque lowers.

In view of the aforementioned problems, an object of the present invention is to provide an eddy current type retardation device which can efficiently eliminate the leaking magnetic flux at the time of non-braking, without increasing the weight, and generate a great braking torque at the time of braking.

For achieving the aforesaid object, the present invention provides an arrangement wherein, a cylindrical fixed frame formed of a non-magnetic material and having an inner space portion of a rectangular section is arranged within a brake drum connected to a rotational shaft, a number of pole pieces are arranged at peripherally equal intervals on an outer cylindrical portion of the fixed frame, and a number of permanent magnets are arranged on a magnet supporting ring rotatably supported in the inner space portion of the fixed frame so that every two magnets are opposed to the pole piece and every two polarities thereof with respect to the pole piece are different.

The advantage of the inventive device results of as follows: A cylindrical fixed frame having an inner space portion of a rectangular section is arranged within a brake drum, and a number of pole pieces opposed to the inner peripheral surface of the brake drum are arranged at peripherally equal intervals on an outer cylindrical portion of the fixed frame. A magnet supporting ring is supported relatively rotatably by an arranging pitch amount (half pitch amount of the pole piece) of permanent magnets in the inner space portion of the fixed frame.

At the time of non-braking, the pole pieces of the fixed frame formed of a non-magnetic material assume are laid over two permanent magnets different in polarity of the magnet supporting ring. There is formed a short-circuited magnetic closed circuited passing through two permanent magnets peripherally adjacent to each other, the pole piece and the magnet supporting ring, and the magnetic field is not applied to the brake drum from the permanent magnets. Since the whole surface of two permanent magnets peripherally adjacent to each other of the magnet supporting ring is covered by the pole piece, a leaking magnetic flux rarely occurs.

At the time of braking, when the magnet supporting ring is rotated by the arranging pitch amount of the permanent magnets each pole piece is laid over two permanent magnets having the same polarity. The magnetic field from two permanent magnets permeates through the pole pieces to vertically act on the brake drum. When the rotating brake drum crosses the magnetic field, an eddy current flows in the brake drum, and the brake drum receives the braking torque.

The invention will now be described in detail with reference to an example of embodiment shown in the accompanying diagrammatic drawings, in which:

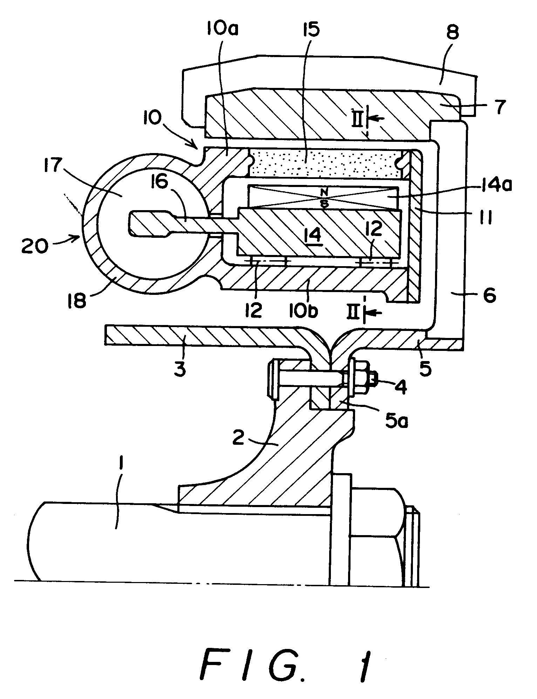

- Fig. 1: is a side sectional view of an eddy current type retardation device according to the present invention,
- Fig. 2: is a partial front sectional view showing the relationship between pole pieces and a magnet supporting ring at the time of non-braking, and
- Fig. 3: is a partial front sectional view showing the relationship between pole pieces and a magnet supporting ring at the time of braking.

An eddy current type retardation device according to the present invention comprises a brake drum 7 formed of a conductor connected, for example, to an output rotational shaft 1 of a vehicular transmission or speed change gear, a fixed frame 10 formed of a non-magnetic material arranged interiorly of the brake drum 7, and a magnet supporting ring 14 rotatably supported in an inner space portion of the fixed frame 10. In the brake drum 7, a flange portion 5a of a boss 5 and an end wall portion of the brake drum 3 of a parking brake are placed on a mounting flange 2 which is fitted to the rotational shaft 1 by spline and fastened by bolts 4. The brake drum 7 provided with a cooling fin 8 is connected to spokes 6 extending radially from the boss 5.

The fixed frame 10 is of a cylindrical shape provided with an inner space portion of a rectangular section, and more specifically, the fixed frame 10 is designed so that an annular cover plate 11 is connected to a cylindrical body of C-shaped section. The fixed frame 10 is secured, for example, to a gear box wall of said transmission by suitable means. A number of ferromagnetic plates or pole pieces 15 are fastened at peripherally equal intervals to an outer cylindrical portion 10a of the fixed frame 10. Preferably, the pole pieces 15 are cast within the fixed frame 10 when it is molded. The magnet supporting ring 14 is rotatably supported on an inner space portion, namely, an inner cylindrical portion 10b of the fixed frame 10.

Preferably, three fluid pressure actuators 20 are connected at peripherally equal intervals to the left end wall of the fixed frame 10. The fluid pressure actuator 20 comprises a cylinder 18 into which a piston 17 is fitted. An arm 16 projecting from the magnet supporting ring 14 via a slit of the left end wall of the fixed frame 10 is connected to a rod projecting outwardly from the piston 17.

Permanent magnets 14a having an area about half of that of the pole pieces 15 and in number twice of that of the pole pieces 15 are arranged at peripherally equal intervals one half that of the pole pieces 15.

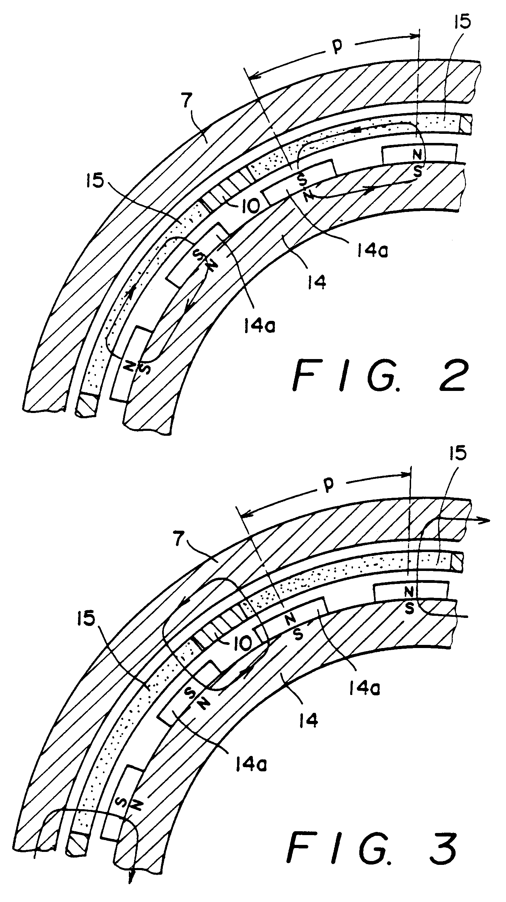

As shown in Fig. 2, the magnet supporting ring 14 is formed of a non-magnetic material such as aluminium. A number of permanent magnets 14a are arranged against the pole pieces 15 so that every two polarities of the permanent magnets 14a with respect to the pole pieces 15 are peripherally different.

Next, the operation of the eddy current type retardation device according to the present invention will be described hereinafter. The brake drum 7 is rotated together with the rotational shaft 1, whereas in the state in which the polarities of two permanent magnets 14a peripherally adjacent to each other with respect to the common pole piece 15 at the time of non-braking are different from each other as shown in Fig. 2, a short-circuited magnetic closed circuit is generated between each pole piece 15 and the magnet supporting ring 14, and the magnetic field is not applied to the brake drum 7. Since the pole pieces 15 cover the entire outer peripheral surface of the two permanent magnets 14a, the magnetic flux leaking to the brake drum 7 rarely occurs. Accordingly, the brake drum 7 is not subjected to a dragging torque.

When the magnet supporting ring 14 is rotated by the arranging pitch p amount of the permanent magnets 14a by the fluid pressure actuators 20 at the time of braking, the polarities of two permanent magnets 14a adjacent to each other become the same with respect to the common pole piece 15, as shown in Fig. 3. Accordingly, the two magnets 14a equally apply the magnetic field to the brake drum 7 via the pole pieces 15. When the rotating brake drum 7 crosses the magnetic field, an eddy current flows in the brake drum 7, and the brake drum receives a braking torque. At this time, there is generated a magnetic closed circuit from the permanent magnets 14a to the pole piece 15, the brake drum 7, the adjacent pole piece 15, the adjacent permanent magnets 14a and the magnet supporting ring 14.

The pole pieces 15 of the outer cylindrical portion 10a of the fixed frame 10 assume, by rotating the magnet supporting ring 14 by the arranging pitch amount of the permanent magnets 14a, a non-braking state in which a short-circuited magnetic closed circuit is formed between the pole pieces 15 and the magnet supporting ring 14 and a braking state in which a magnetic closed circuit is formed between the brake drum 7 and the magnet supporting ring 14 to apply the magnetic field to the brake drum 7.

While in the above-described embodiment, the magnet supporting ring has been rotated normally and reversely by the arranging pitch amount of the permanent magnets by means of the fluid pressure actuators, it is to be noted that the magnet supporting ring may be rotated by an electric motor and/or solenoid means, and that the magnet supporting ring may be fixed and the fixed frame may be rotated, instead of the above embodiment.

As described above, the present invention provides an arrangement wherein a cylindrical fixed frame formed of a non-magnetic material and having an inner space portion of a rectangular section is arranged within a brake drum connected to a rotational shaft, a number of the pole pieces are arranged at peripherally equal intervals on an outer cylindrical portion of the fixed frame, and a number of permanent magnets are arranged on a magnet supporting ring rotatably supported in the inner space portion of the fixed frame so that every two magnets are opposed to the pole piece and every polarities thereof with respect to the pole pieces are different. Therefore, when the polarities of two permanent magnets adjacent to each other with respect to the pole pieces are reversed to each other at the time of non-braking, a short-circuited magnetic closed circuit is generated between a pair of pole pieces, and the brake drum is not subjected to the braking torque.

Since the entire surface of two permanent magnets peripherally adjacent to each other of the magnet supporting ring is covered by the pole piece, the magnetic flux leaking to the brake drum rarely occurs. Accordingly, the fixed frame has substantially the same dimension as that of prior art, that is, an increase of weight is not brought forth. A magnetic flux leaking to the brake drum is eliminated, and a dragging torque of the brake drum at the time of non-braking can be overcome.

### List of reference numbers

- p: pitch
- 1: rotational shaft
- 2: mounting flange
- 3: brake drum
- 4: bolt
- 5: boss
- 5a: flange portion
- 6: spoke
- 7: brake drum
- 8: cooling fin
- 9:
- 10: fixed frame
- 10a: outer cylindrical portion
- 10b: inner cylindrical portion
- 11: cover plate
- 12: bearing
- 13:
- 14: magnet supporting ring
- 14a: permanent magnet
- 15: pole piece (ferromagnetic plate)
- 16: arm
- 17: piston
- 18: cylinder
- 19:
- 20: fluid pressure actuator

## Claims

1. An eddy current type retardation device characterised in that a cylindrical fixed frame (10) formed of a non-magnetic material and having an inner space portion of a rectangular section is arranged within a brake drum (7) connected to a rotational shaft (1), a plurality of pole pieces (15) are arranged at peripherally equal intervals on an outer cylindrical portion (10a) of the fixed frame (10), and a plurality of permanent magnets (14a) are arranged on a magnet supporting ring (14) supported in the inner space portion (10b) of the fixed frame (10) whereby the plurality of permanent magnets (14a) is rotatable, so that every two magnets (14a) are opposed to the pole pieces (15) and every two polarities thereof with respect to the pole piece (15) are different.

2. An eddy current type retardation device according to claim 1, characterised in that the pole pieces (15) are cast within the fixed frame (10) during its molding.

3. An eddy current type retardation device according to claims 1 and 2, characterised in that the plurality of permanent magnets (14a) is rotated by a fluid pressure actuator (20).

4. An eddy current type retardation device according to claim 3, characterised in that the plurality of permanent magnets (14a) is rotated by three fluid pressure actuators (20).

5. An eddy current type retardation device according to claim 1 to 4, characterised in that the plurality of permanent magnets (14a) is rotated by electric means.

6. An eddy current type retardation device according to claim 5, characterised in that the electric means are an electric motor and/or solenoid means.

7. An eddy current type retardation device according to claim 1 to 6, characterised in that the plurality of permanent magnets (14a) are supported in a fixed manner on the magnet supporting ring (14) and the ring (14) is rotatable.

8. An eddy current type retardation device according to claim 1 to 6, characterised in that the plurality of permanent magnets (14a) are supported in a fixed manner on the magnet supporting ring (14), whereby the magnet supporting ring (14) is fixed and the fixed frame will be rotated.

9. An eddy current type retardation device according to claim 1 to 8, characterised in that the permanent magnets (14a) having an area about half of that of the pole pieces (15) and in number twice of that of the pole pieces (15) are arranged, at peripherally equal intervals on half of that of the pole pieces (15).

10. An eddy current type retardation device according to claim 1 to 9, characterised in that the magnet supporting ring (14) is formed of a non-magnetic material such as aluminium.

## Revendications

1. Un dispositif ralentisseur du type à courant de Foucault caractérisé en ce qu'un cadre fixe cylindrique (10), formé d'une matière non magnétique et comportant une partie d'espace intérieur à section transversale rectangulaire, est agencé à l'intérieur d'un tambour (7) de frein relié à un arbre rotatif (1), une série de pièces polaires (15) est disposée à des intervalles égaux sur la périphérie d'une partie cylindrique extérieure (10a) du cadre fixe (10), et une série d'aimants permanents (14a) est disposée sur une bague (14) de supports d'aimants supportée dans la partie (10b) d'espace intérieur du cadre fixe (10), la série d'aimants permanents (14a) pouvant être tournée d'une manière telle qu'il est opposé, à chacune des pièces polaires (15), un groupe de deux aimants permanents (14a) et que, selon cette rotation, les polarités des deux aimants opposés à une pièce polaire sont les mêmes ou sont différentes.

2. Un dispositif ralentisseur du type à courant de Foucault selon la revendication 1, caractérisé en ce que les pièces polaires (15) sont coulées à l'intérieur du cadre fixe (10) pendant son moulage.

3. Un dispositif ralentisseur du type à courant de Foucault selon la revendication 1 ou 2, caractérisé en ce que la série d'aimants permanents (14a) est tournée par un actionneur (20 à pression de fluide.

4. Un dispositif ralentisseur du type à courant de Foucault selon la revendication 3, caractérisé en ce que la série d'aimants permanents (14a) est tournée par trois actionneurs (20) à pression de fluide.

5. Un dispositif ralentisseur du type à courant de Foucault selon l'une des revendication 1 à 4, caractérisé en ce que la série d'aimants permanents (14a) est tournée par un moyen électrique.

6. Un dispositif ralentisseur du type à courant de Foucault selon la revendication 5, caractérisé en ce que le moyen électrique consiste en un moteur électrique et/ou un moyen d'électroaimant.

7. Un dispositif ralentisseur du type à courant de Foucault selon l'une des revendications 1 à 6, caractérisé en ce que la série d'aimants permanents (14a) est supportée de manière fixe sur une bague (14) de supports d'aimants, et la bague (14) peut tourner.

8. Un dispositif ralentisseur du type à courant de Foucault selon l'une des revendications 1 à 6, caractérisé en ce que la série d'aimants permanents (14a) est supporté d'une manière fixe sur la bague (14) de supports d'aimants, la bague (14) de supports d'aimants étant fixe et le cadre fixe étant tourné.

9. Un dispositif ralentisseur du type à courant de Foucault selon l'une des revendications 1 à 8, caractérisé en ce que la superficie des aimants permanents (14a) est à peu près la moitié de celle des pièces polaires (15) et qu'ils sont disposés sur la périphérie, en un nombre double de celui des pièces polaires (15), à des intervalles égaux entre eux et égaux à la moitié de chacun des intervalles des pièces polaires (15).

10. Un dispositif ralentisseur du type à courant de Foucault selon l'une des revendications 1 à 9, caractérisé en ce que la bague (14) de supports d'aimants est en une matière non magnétique, par exemple de l'aluminium.

## Patentansprüche

1. Wirbelstrombremse, dadurch gekennzeichnet, daß ein zylindrischer, festgelegter Rahmen (10), der aus einem nichtmagnetischen Material besteht und einen Innenraumbereich mit rechteckigem Querschnitt aufweist, innerhalb einer Bremstrommel (7) angeordnet ist, die mit einer Drehwelle (1) verbunden ist, daß eine Vielzahl von Polstücken (15) auf einem äußeren zylindrischen Bereich (10a) des festgelegten Rahmens (10) in Umfangsrichtung mit gleichen Abständen angeordnet ist, und daß eine Vielzahl von Dauermagneten 14a auf einem Magnettragring (14) angeornet ist, der in dem Innenraumbereich (10b) des festgelegten Rahmens (10) gelagert ist, wobei die Vielzahl der Dauermagneten (14a) drehbar ist, so daß jeweils zwei Magnete (14a) gegenüber den Polstücken (15) liegen und jeweils zwei Polaritäten davon in bezug auf das Polstück (15) unterschiedlich sind

2. Wirbelstrombremse nach Anspruch 1, dadurch gekennzeichnet, daß die Polstücke (15) in den festgelegten Rahmen (10) während seiner Formgebung eingegossen sind.

3. Wirbelstrombremse nach den Ansprüchen 1 und 2, dadurch gekennzeichnet, daß die Vielzahl der Dauermagneten (14a) durch einen Flüssigkeitsdruckantrieb (20) verdrehbar sind.

4. Wirbelstrombremse nach Anspruch 3, dadurch gekennzeichnet, daß die Vielzahl der Dauermagneten (14a) durch drei Flüssigkeitsdruckantriebe (20) verdrehbar sind.

5. Wirbelstrombremse nach den Ansprüchen 1 bis 4, dadurch gekennzeichnet, daß die Vielzahl der Dauermagneten (14a) durch elektrische Mittel verdrehbar sind.

6. Wirbelstrombremse nach Anspruch 5, dadurch gekennzeichnet, daß die elektrischen Mittel als ein Elektromotor und/oder als Magnetspulen ausgebildet sind.

7. Wirbelstrombremse nach den Ansprüchen 1 bis 6, dadurch gekennzeichnet, daß die Vielzahl der Dauermagneten (14a) in einer fixierten Weise von dem Magnettragring (14) getragen wird und der Ring (14) drehbar ist.

8. Wirbelstrombremse nach den Ansprüchen 1 bis 6, dadurch gekennzeichnet, daß die Vielzahl der Dauermagnete (14a) in einer fixierten Weise von dem Magnettragring (14) getragen wird, wobei der Magnettragring (14) festgelegt und der festgelegte Rahmen verdrehbar ist.

9. Wirbelstrombremse nach den Ansprüchen 1 bis 8, dadurch gekennzeichnet, daß die Dauermagneten (14a) eine Fläche aufweisen, die in etwa der Hälfte derjenigen der Polstücke (15) entspricht, und in einer zweifachen Anzahl als diejenige der Polstücke (15) in Umfangsrichtung in gleichen Abständen angeordnet sind, die der Hälfte derjenigen der Polstücke (15) entsprechen.

10. Wirbelstrombremse nach den Ansprüchen 1 bis 9, dadurch gekennzeichnet, daß der Magnettragring aus einem nichtmagnetischen Material wie Aluminium besteht.
